# FASCICULE DE BREVET EUROPEEN

(11) **EP 2 333 365 B1**
(45) Date de publication et mention de la délivrance du brevet: **18.02.2015**
(21) Numéro de dépôt: 10193049.3
(22) Date de dépôt: 30.11.2010
(51) Int. Cl.: F16C 19/52, F16C 25/08

(54) **Entretoises à longueurs ajustées pour roulements**
Abstandshalter angepasster Länge für Wälzlager
Spacers with adjusted lengths for bearings

(30) Priorité: 30.11.2009 FR 0958471
(43) Date de publication de la demande: 15.06.2011
(73) Titulaire: Airbus Defence and Space SAS, 78130 Les Mureaux (FR)
(72) Inventeur: Guay, Michel Pascal Noël, 31200, Toulouse (FR)
(74) Mandataire: Fourcade, Emmanuelle

(56) Documents cités:
- WO-A1-99/23390
- JP-A- 5 079 514
- US-A- 6 158 895

## Description

L'invention relève du domaine des paliers à roulements. Elle concerne plus particulièrement les paliers soumis à des gradients de température.

### Contexte de l'invention et problème posé

Les roulements à billes sont utilisés, depuis des décennies, dans une quantité considérables d'équipements comportant des mécanismes mobiles en rotation. Leur rôle est de limiter la friction entre deux pièces dont l'une, le rotor, est mobile en rotation par rapport à l'autre, le stator, fixé au support, en remplaçant le phénomène de glissement entre les deux pièces par un phénomène de roulement. Un roulement à billes ou à rouleaux coniques est alors usuellement composé de deux bagues coaxiales comportant des pistes de roulement, entre lesquelles est disposée une série d'éléments de roulement (billes ou rouleaux) dont l'espacement est maintenu constant. On se limitera dans la suite de l'exposé au cas des roulements à billes, bien que l'invention ne soit pas limitée à ce cas là.

De cette manière, la friction entre les pièces en rotation est considérablement réduite, ce qui réduit par conséquent l'énergie nécessaire à maintenir le rotor en rotation, ou l'échauffement thermique entre ces pièces.

Les bagues des roulements ainsi que les billes sont classiquement métalliques, le plus souvent en acier à roulement. Pour certaines applications, on utilise également des bagues en acier et des billes en céramique. Des roulements entièrement en céramique existent également.

De façon améliorée, il est fréquent de créer un palier à roulements en associant une paire de roulements à billes disposés entre le rotor et le stator, afin de maintenir ceux-ci parfaitement coaxiaux, de manière à créer une liaison pivot.

On entend par arbre la partie de la pièce en contact avec les bagues intérieures des roulements, cette pièce étant soit le stator lorsque l'élément central du palier est fixe par rapport au support, soit le rotor lorsque l'élément central du palier est en rotation par rapport au support. On entend par moyeu la partie de la pièce en contact avec les bagues externes des roulements, cette pièce étant à l'inverse de l'arbre, soit le rotor, soit le stator. Dans tous les cas, le moyeu enveloppe l'arbre.

De tels paliers à roulement sont typiquement utilisés dans des mécanismes, tels que dispositif d'entraînement, broches de machines-outils, turbines, mécanismes de pointage, mécanismes de précision, roue cinétique, une telle roue cinétique étant par exemple utilisée dans une application de contrôle d'attitude de satellite.

Lors de leur montage et de leur fonctionnement, les différentes pièces formant un roulement à billes sont naturellement soumises à déformations, ce qui entraîne l'apparition d'un jeu mécanique entre les pièces, susceptible de nuire soit à la performance des roulements, soit au pointage précis du moyeu.

Pour les mécanismes de précision du type qui vient d'être cité, on utilise des roulements à billes dits préchargés pour supprimer ces jeux, et assurer une bonne précision de pointage. La mise en précharge d'une paire de roulements consiste à appliquer en permanence un effort axial de serrage sur les faces des roulements. Cet effort provoque une déformation élastique entre pistes et billes et engendre une pression de contact, ce qui permet de supprimer le jeu.

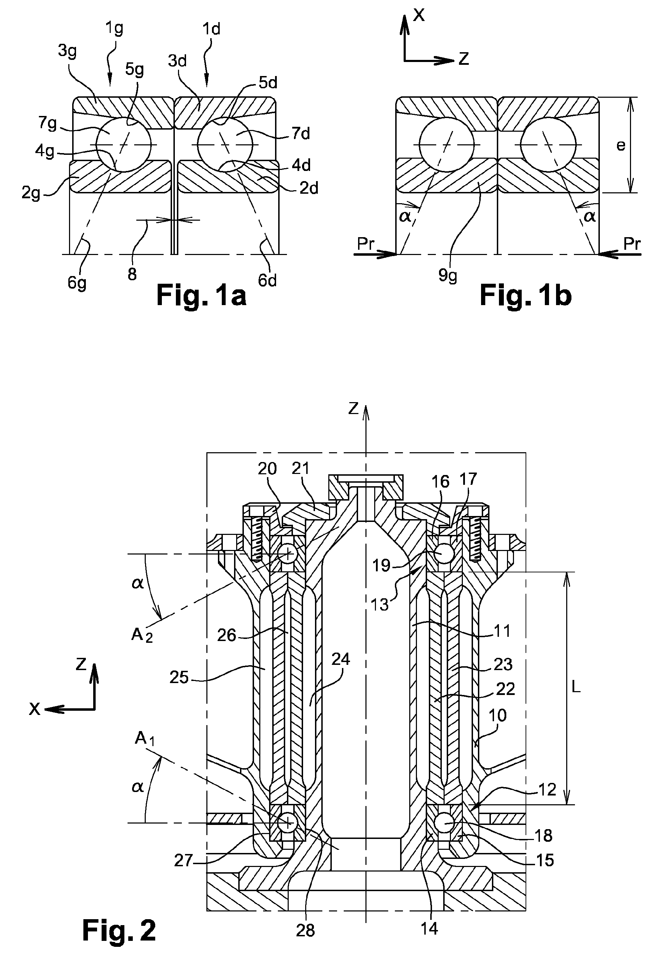

Pour maîtriser et optimiser les frottements, on utilise fréquemment des roulements appairés sur lesquels est appliquée une précharge telle qu'illustrée par les figures 1a et 1 b.

Sur la figure 1a qui illustre un palier à roulement non encore préchargé, deux roulements à billes 1g, 1d sont juxtaposés. Seule la moitié des roulements est représentée, l'axe de symétrie Z des roulements étant horizontal sur la figure. Les bagues intérieures 2g, 2d, et extérieures 3g, 3d sont figurées en coupe. Dans cet exemple, les pistes internes 4g, 4d et les pistes externes 5g, 5d définissent des normales 6g, 6d au contact des billes inclinées suivant un certain angle de contact α prédéterminé. Les normales 6g et 6d étant concourantes vers l'extérieur des roulements, on parle d'un montage dos à dos. L'inversion des roulements 1g et 1d amènerait à une configuration de montage dit « face à face » où les normales au contact seraient concourantes vers l'intérieur des roulements. Les billes 7g, 7d sont simplement en contact avec leur piste interne et externe respectives. Il subsiste volontairement un jeu 8 entre les deux bagues intérieures 2g, 2d, alors que les deux bagues extérieures 3g, 3d sont en contact.

Dans la configuration de la figure 1b, une précharge est appliquée, sous la forme d'une force axiale *Pr* plaquant les bagues intérieures 2g, 2d l'une contre l'autre. Cette précharge provoque ici une déformation élastique 9g, 9d (ici très exagérée pour les besoins de la figure) de chaque bille 7g, 7d et des pistes, empêchant l'apparition de jeu dans le montage. Lorsqu'on supprime le jeu en appliquant la précharge, l'angle de contact oblique α augmente légèrement (typiquement de quelques pourcents). L'angle de contact résultant est connu et réalisé à quelques degrés près par les fabricants de roulement, dans un intervalle variant typiquement de 10 à 40 degrés.

Il existe de nombreuses variantes de réalisation de cette précharge. On parle de précharge rigide lorsque la précharge est appliquée par un déplacement imposé de l'une des bagues par rapport à l'autre. On se limitera ici au cas des précharges rigides.

La précharge est ainsi une caractéristique importante du palier à roulements. Elle permet de lui donner une rigidité définie et maîtrisée. Elle a également une influence directe sur le niveau de chargement et de vitesse du rotor admissibles. La difficulté pour le concepteur est de garantir une précharge maîtrisée et stable dans le temps.

Une réalisation connue de l'état de l'art qui assure à la fois une précharge rigide et une bonne rigidité du palier en basculement, c'est-à-dire autour d'axes perpendiculaires à l'axe du palier, est la suivante.

Un palier à roulements, du type comportant un arbre central et un moyeu mobiles en rotation l'un par rapport à l'autre, comporte au moins deux roulements, l'un dit inférieur, l'autre dit supérieur, disposés entre l'arbre central et le moyeu selon deux positions espacées dans la direction axiale (c'est-à-dire par définition selon l'axe Z). Ces roulements sont dotés de bagues intérieure et extérieure et de billes, la bague intérieure de chaque roulement étant ajustée autour de l'arbre central et la bague extérieure étant ajustée à l'intérieur du moyeu, les roulements étant montés dos à dos ou face-à-face. Une précharge rigide est appliquée sur ces roulements selon la direction axiale. Des entretoises sont disposées entre les roulements, une entretoise dite interne prenant appui, par ses extrémités haute et basse, sur les bagues intérieures des roulements supérieur et inférieur respectivement, une entretoise dite externe prenant appui, par ses extrémités haute et basse, sur les bagues extérieures des roulements supérieur et inférieur respectivement.

Une précharge rigide est appliquée sur les roulements selon la direction axiale grâce à des éléments de montage adaptés à cet effet. Par exemple on utilise des brides de montage serrant les bagues des roulements sur les entretoises.

Ce type de montage est avantageux, car il permet d'écarter les roulements d'une distance réglable en fonction de la longueur des entretoises. Suivant l'état de l'art, la longueur des entretoises est choisie suffisamment grande pour assurer une bonne précision de pointage et la rigidité désirée en basculement. Plus les entretoises sont longues, plus la rigidité du palier en basculement sera grande. Cependant, suivant cet état de l'art, afin de limiter l'encombrement et la masse du palier, les entretoises auront la longueur minimale permettant d'assurer la rigidité désirée.

Ce dispositif avantageux en termes de rigidité en basculement, d'encombrement et de masse, présente cependant une limitation importante pour certaines applications nécessitant que la précharge reste sensiblement constante lors de variations de température.

En effet, il est clair que, lorsqu'on soumet un roulement à billes à une variation de température, la précharge en est sensiblement altérée. Elle peut augmenter, ce qui dégrade le couple de frottement et la durée de vie par usure des pièces en contact. Elle peut aussi diminuer jusqu'à perte complète de la précharge, auquel cas, le jeu mécanique qui en résulte dégrade la précision de pointage et également la durée de vie à cause de chocs engendrés dans le roulement.

On distingue ici deux cas de variations de température : l'excursion et le gradient :
- **l'excursion de température** désigne une variation uniforme de température, avec un palier à roulements homogène en température, celle-ci variant au cours du temps;
- **le gradient de température** désigne une variation de température dans l'espace, d'un bout à l'autre du palier à roulements. Un gradient radial (arbre plus chaud ou plus froid que le moyeu) modifie sensiblement la précharge. Par contre, un gradient axial (un roulement plus chaud que l'autre) affecte peu la précharge.

Une excursion en température se rencontre fréquemment lors du fonctionnement du système, du fait par exemple de l'échauffement des paliers en particulier pour des grandes vitesses de rotation, ou du fait de la présence d'éléments dissipatifs fonctionnant à proximité, comme des électroniques par exemple.

Un gradient en température se rencontre couramment du fait que le stator est en contact thermique de conduction avec le support, alors que la conduction thermique du rotor vers le support passe par les billes des roulements qui offrent un chemin thermique réduit, d'autant plus lorsqu'elles sont en matériau faiblement conducteur thermique, en particulier si elles sont en céramique.

De manière à limiter la variation de précharge dans le cas d'une excursion de température, il est connu de n'utiliser pour toutes les pièces du palier et des roulements (y compris les billes) que des matériaux qui ont le même coefficient de dilatation thermique (autrement appelé coefficient d'expansion thermique ou coefficient de dilatation thermoélastique), par exemple de l'acier. On obtient ainsi une précharge qui reste constante lorsque le palier est soumis à une excursion de température, car l'excursion engendre une dilatation isotrope du palier, les dilatations axiale et radiale étant proportionnelles, avec un angle de contact qui reste constant.

Par contre, même dans ce cas de matériaux de même coefficient de dilatation, quand le palier est soumis à un gradient de température radial, la dilatation du palier n'est plus isotrope et les dilatations axiale et radiale ne se compensent que partiellement, avec un angle de contact oblique qui varie sensiblement. La précharge peut en être affectée très sensiblement.

Le document JP 5 079514 divulge un montage "face à face" des roulements où il est nécessaire d'utiliser des matériaux présentant des coefficients de dilatation thermique différentes pour les entretoises interne et externe.

### Objectifs de l'invention

La présente invention a donc pour objet de remédier à ce problème, en proposant une nouvelle disposition de palier à roulements préchargés, adaptée à prendre en compte les gradients de température.

### Exposé de l'invention

A cet effet, l'invention vise en premier lieu un palier à roulements, du type comportant un arbre central et un moyeu mobiles en rotation l'un par rapport à l'autre, le palier comportant au moins deux roulements, l'un dit inférieur, l'autre dit supérieur, disposés entre l'arbre central et le moyeu selon deux positions espacées dans la direction axiale Z, ces roulements étant dotés de bagues intérieure et extérieure et de billes, la bague intérieure de chaque roulement étant ajustée autour de l'arbre central et la bague extérieure à l'intérieur du moyeu, les roulements étant montés dos à dos, une précharge rigide étant appliquée sur ces roulements selon la direction axiale, des entretoises étant disposées entre ces roulements, une entretoise dite interne prenant appui, par ses extrémités haute et basse, sur les bagues intérieures des roulements supérieur et inférieur respectivement, une entretoise dite externe prenant appui, par ses extrémités haute et basse, sur les bagues extérieures des roulements supérieur et inférieur respectivement.

Le palier à roulements est tel que les entretoises, interne et externe, présentent des longueurs ajustées afin de limiter à moins de 30% les variations de la précharge rigide dues aux gradients thermiques d'un point à l'autre du palier, en particulier les gradients thermiques dans le sens radial, étant entendu que, pour une longueur optimale des entretoises, l'effet de la dilatation différentielle axiale des entretoises (22, 23) sur la précharge, allant dans le sens d'une augmentation de la précharge, compense l'effet de la dilatation différentielle radiale des bagues (14, 16, 15, 17), allant dans le sens d'une diminution de cette même précharge.

Les longueurs des entretoises seront avantageusement ajustées à leur valeur optimale avec une tolérance inférieure à une dizaine de pourcent.

Il est avantageux que l'angle (α) de contact des billes soit choisi supérieur ou égal à 25 degrés, de manière à limiter l'encombrement et la masse du palier tout en assurant une bonne rigidité.

Dans une réalisation préférée, au moins une des bagues, et de préférence chacune des bagues d'au moins un roulement, est libre de se déplacer selon la direction axiale par rapport aux autres bagues, par exemple grâce un ajustement glissant par rapport à son support (arbre ou moyeu).

Afin de maintenir cet ajustement glissant, il sera avantageux que l'arbre, le moyeu, et les bagues soient fabriqués dans les mêmes matériaux, ou dans des matériaux ayant sensiblement le même coefficient de dilatation thermique.

Selon un mode de réalisation avantageux, des brides de montage sont utilisées pour serrer les bagues des roulements sur les entretoises et ces brides ont une raideur significativement plus faible (typiquement au moins trois fois plus petite) que la raideur axiale des entretoises.

Afin que la précharge reste insensible à une excursion de température, il sera avantageux que les bagues et les billes soient fabriquées dans les mêmes matériaux, ou dans des matériaux ayant sensiblement le même coefficient de dilatation thermique.

Afin que la précharge reste insensible à une excursion de température alors que les bagues et les billes ne sont pas fabriquées dans les mêmes matériaux, ou dans des matériaux ayant sensiblement le même coefficient de dilatation thermique, il sera avantageux de maintenir la température du palier au voisinage d'une température moyenne donnée, aux gradients de température près.

Avantageusement, les longueurs des deux entretoises sont identiques, aux erreurs d'usinage près.

Selon un mode de réalisation préféré, les roulements sont de dimensions identiques, et le palier comporte pour chaque groupe de deux roulements espacés le long de la direction axiale Z, deux entretoises cylindriques et coaxiales.

Selon un mode de réalisation avantageux, le palier comporte au moins entre l'arbre central et l'entretoise interne, ou entre les deux entretoises, ou entre l'entretoise externe et le moyeu, des jeux adaptés à permettre une dilatation différentielle radiale de l'une au moins des entretoises vis-à-vis de l'autre entretoise, ou de l'arbre central, ou du moyeu.

Selon un mode de réalisation avantageux, l'un des roulements est simplement maintenu en place par les entretoises, d'une part, et des brides de serrage, d'autre part, ces brides de montage ayant une raideur significativement plus faible (typiquement au moins trois fois plus faible) que la raideur axiale des entretoises.

Selon un mode de réalisation favorable, l'un des roulements, dit supérieur, est simplement maintenu en place d'un côté par les entretoises et de l'autre côté par des brides de serrage, l'autre roulement, dit inférieur, est simplement maintenu en place d'un côté par les entretoises, et de l'autre côté par des épaulements aménagées dans l'arbre central et le moyeu, l'ensemble comprenant le roulement inférieur, les entretoises et le roulement supérieur formant ainsi un volume sensiblement cylindrique, d'épaisseur égale à l'épaisseur e d'un roulement, et s'insérant dans un logement de forme correspondante au sein de l'espace compris entre l'arbre central et le moyeu.

L'invention vise également un procédé de fabrication d'un palier à roulements, du type comportant un arbre central et un moyeu mobiles en rotation l'un par rapport à l'autre, le palier comportant au moins deux roulements, disposés entre l'arbre central et le moyeu selon deux positions espacées dans la direction axiale Z, ces roulements étant dotés de bagues, intérieure et extérieure , et de billes, la bague intérieure de chaque roulement prenant appui sur l'arbre central et la bague extérieure sur le moyeu, les roulements étant montés dos à dos, une précharge rigide étant appliquée sur ces roulements selon la direction axiale, des entretoises étant disposées entre ces roulements, une entretoise dite interne prenant appui, par ses extrémités haute et basse, sur les bagues intérieures des roulements supérieur et inférieur respectivement, une entretoise dite externe prenant appui, par ses extrémités haute et basse, sur les bagues extérieures des roulements supérieur et inférieur respectivement.

Le procédé comporte une étape de calcul des longueurs des entretoises, interne et externe, afin de minimiser les variations de la précharge rigide des roulements dues à des gradients thermiques prédéterminés d'un point à l'autre du palier, en particulier des gradients thermiques dans le sens radial, cette minimisation utilisant une compensation des variations de précharge, étant entendu que, pour une longueur optimale des entretoises, l'effet de la dilatation différentielle axiale des entretoises sur la précharge, allant dans le sens d'une augmentation de la précharge, compense l'effet de la dilatation différentielle radiale des bagues allant dans le sens d'une diminution de cette même précharge.

### Brève description des figures

Les buts et avantages de l'invention seront mieux compris à la lecture de la description et des dessins d'un mode particulier de réalisation, donné à titre d'exemple non limitatif, et pour lequel les dessins représentent :
- figure 1 : une vue en coupe d'un palier à roulement dans une configuration non préchargée (figure 1a), et préchargée (figure 1 b);
- figure 2 : une vue en coupe d'un palier à roulements selon l'invention,
- figure 3 : un graphique illustrant la sensibilité de la précharge à un gradient de température, dans un cas sans entretoise (avec les deux roulements juxtaposés), dans l'autre cas pour des entretoises ayant une longueur ajustée.

### Description détaillée d'un mode de réalisation de l'invention

Telle qu'illustrée sur la figure 2, l'invention concerne un palier à roulements pour un dispositif comportant un moyeu 10, mobile en rotation autour d'un arbre central 11. Par simplification, la figure 2 ne représente que la partie centrale du moyeu 10.

L'arbre central 11 et le moyeu 10 sont conçus de façon classique, et dans des matériaux non détaillés ici, métalliques ou autre. Avantageusement, l'arbre et le moyeu sont fabriqués dans un même matériau, par exemple en acier inox (10.4 µm/m/C) ou dans des matériaux différents mais ayant sensiblement le même coefficient de dilatation thermique, ce qui facilite grandement les activités de conception.

Pour la suite de la description, on note Z l'axe de rotation du moyeu 10 autour de l'arbre central 11, et on définit les termes "radial" et axial" par référence à cet axe de rotation Z.

Le palier à roulements comporte ici deux roulements : inférieur 12, et supérieur 13, respectivement, de dimensions identiques.

Ces roulements sont ici de type à billes, mais il est clair que d'autres types de roulements, par exemple à rouleaux coniques sont envisageables, sans modification du principe de l'invention. Les roulements 12, 13 sont supposés dotés de bagues intérieure 14, 16 et extérieure 15, 17 métalliques, par exemple en acier inox, et de billes 18, 19 en acier inox également. Le procédé de lubrification des roulements n'est pas détaillé ici.

Les bagues internes (respectivement externes) sont ajustées autour de l'arbre (respectivement à l'intérieur du moyeu) avec un contact glissant présentant un jeu suffisamment petit (typiquement quelques microns) pour éviter tout endommagement du palier lors de déplacements latéraux (dans le sens radial) par exemple sous l'effet de vibrations ou de chocs externes, mais suffisamment grand pour que au moins une des bagues, et de préférence chacune des bagues d'au moins un des roulements soit libre de se déplacer selon la direction axiale par rapport aux autres bagues.

Avantageusement, le matériau des bagues des roulements possède sensiblement le même coefficient de dilatation thermique que le matériau utilisé pour l'arbre et le moyeu, de sorte que les jeux d'ajustement entre les bagues internes et l'arbre d'une part, et entre les bagues externes et le moyeu d'autre part, soient sensiblement constants lors d'excursion en température.

On comprend que la bague intérieure 14, 16 de chaque roulement 12, 13 est fixe, et que la bague extérieure 15, 17 est mobile en rotation, solidairement avec le moyeu 10. Les caractéristiques géométriques précises des roulements 12, 13 sortent du cadre de la présente invention, et ne sont donc pas détaillées plus avant ici.

Les roulements 12, 13 sont montés de façon analogue à la disposition de la figure 1, c'est-à-dire dos à dos. Les normales au contact A1, A2 des billes des roulements 12, 13 sont en effet concourants vers l'extérieur du moyeu 10. Une précharge rigide, de type exposé plus haut, est appliquée sur ces roulements 12, 13 par l'intermédiaire de brides de serrage 20, 21. Le détail de ces pièces et de leur mode de fonctionnement est connu de l'homme de l'art et n'est donc pas détaillé plus avant ici.

Afin d'écarter les roulements 12, 13, par exemple pour obtenir une bonne précision de pointage du roulement et pour réaliser la précharge rigide en conférant au palier et à la structure une rigidité de basculement élevée, deux pièces cylindriques 22, 23 coaxiales, nommées "entretoises" sont interposées entre ces roulements. Sur le palier illustré sur la figure 2, l'entretoise interne 22, en appui sur les bagues intérieures 14, 16, est fixe. L'entretoise externe 23, en appui sur les bagues extérieures 15, 17, est mobile en rotation de façon solidaire avec ces bagues.

Comme on le voit sur la figure 2, ces deux entretoises, interne 22 et externe 23, prennent chacune appui sur une bague de chaque roulement. L'entretoise interne 22 prend appui, par ses extrémités haute et basse, sur les bagues intérieures 16, 14 des roulements supérieur 13 et inférieur 12 respectivement. De même, l'entretoise externe 23 prend appui, par ses extrémités haute et basse, sur les bagues extérieures 17, 15 des roulements supérieur 13 et inférieur 12 respectivement.

Des brides de montage 20, 21 sont utilisées pour serrer les bagues des roulements sur les entretoises 22, 23. Elles ont une raideur plus faible que la raideur axiale des entretoises, typiquement au moins trois fois plus petite que la raideur axiale des entretoises. De la sorte, la dilation des entretoises, dont nous verrons qu'elle joue un rôle essentiel dans le maintien de la précharge, sera peu affectée par la raideur des brides.

Les entretoises ont avantageusement la même longueur, aux erreurs d'usinage près. De la sorte, la précharge qui serait obtenue en plaquant les roulements l'un contre l'autre comme sur la figure 1 est obtenue de la même façon en plaquant les roulements contre les entretoises, grâce aux brides de serrage, et ce quelle que soit la disposition relative des épaulements sur lesquels s'appuient les bagues du roulement inférieur avant serrage. Au serrage, le moyeu et l'arbre s'ajusteront automatiquement dans la direction radiale.

Dans un mode différent de réalisation, les longueurs des deux entretoises sont différentes, mais ajustées de sorte que la précharge désirée soit réalisée au montage du palier.

Dans le présent exemple nullement limitatif de mise en oeuvre de l'invention, l'arbre central 11 comporte un évidement 24 de forme principalement cylindrique, disposé au droit de l'entretoise interne 22. De même, le moyeu 10 comporte un évidement 25 de forme principalement cylindrique au droit de l'entretoise externe 23. Enfin, les entretoises 22, 23, sont séparées par un espace également de forme principalement cylindrique 26.

Outre ces évidements, il existe des jeux, non représentés sur la figure 2, de quelques dixièmes de millimètre (typiquement 0.2 à 0.5 mm) entre les entretoises, l'arbre et le moyeu permettant une dilatation différentielle radiale des entretoises 22, 23, de l'arbre central 11, et du moyeu 10. Dans le cas de montage le plus général, des jeux existent avantageusement entre tout couple de pièces adjacentes : arbre, entretoise interne, entretoise externe, moyeu. On comprendra que si au montage, deux pièces adjacentes se touchent, mais qu'il existe au moins un jeu suffisant entre deux autres pièces adjacentes, cela permettra à l'ensemble des pièces de se repositionner sous l'effet d'une dilatation radiale sans entraîner des efforts excessifs ou des déformations des pièces.

On comprend également que le roulement supérieur 13 est simplement maintenu en place dans la direction axiale par les entretoises 22, 23, d'une part, et les brides de serrage 20, 21, d'autre part. De même, le roulement inférieur 12 est simplement maintenu en place par les entretoises 22, 23 d'une part, et des épaulements 27, 28 aménagés dans l'arbre central 11 et le moyeu 10. L'ensemble comprenant le roulement inférieur 12, les entretoises 22, 23 et le roulement supérieur 13 forme ainsi un volume sensiblement cylindrique, d'épaisseur égale à l'épaisseur e d'un roulement (voir figure 1), et s'insère dans un logement de forme correspondante au sein de l'espace compris entre l'arbre central 11 et le moyeu 10.

Cette disposition permet un montage aisé du palier à roulements.

On comprend également qu'au moins un roulement, ici le roulement supérieur 13 est ajusté par simple contact glissant avec l'arbre et le moyeu, de sorte qu'un déplacement axial d'une bague du roulement par rapport à l'autre bague n'est contrecarré que par la résistance au glissement entre ladite bague et l'arbre ou le moyeu. Ainsi, l'une au moins des bagues, et avantageusement chacune des bagues d'au moins un roulement, est libre de se déplacer selon la direction axiale par rapport aux autres bagues au moins sur une longueur prédéterminée du fait de cet ajustement glissant, selon le jeu des dilatations axiales des entretoises. Par le fait de ce déplacement relatif possible de l'une des bagues par rapport aux autres bagues, le jeu des dilatations axiales des entretoises se transmettra aux bagues des roulements.

Pour limiter les contraintes éventuelles agissant sur les déplacements relatifs des bagues de roulement avec l'arbre ou le moyeu, il sera avantageux que l'arbre, le moyeu et les bagues des roulements soient fabriqués dans les mêmes matériaux, ou dans des matériaux ayant sensiblement le même coefficient de dilatation thermique.

Les matériaux constituant les entretoises 22, 23 ne sont pas nécessairement les mêmes que ceux de l'arbre, du moyeu ou des bagues. Ils sont choisis pour pouvoir être rectifiés avec une grande précision. En effet, il faut pouvoir maîtriser avec une très grande précision la longueur des deux entretoises 22, 23. Chaque entretoise 22, 23 est, dans le présent exemple, constituée de deux cylindres en acier inox (10.4 µm/m/C).

D'autres choix de matériaux sont envisageables, avec par exemple mais de façon nullement limitative : les aciers austénitiques (15 à 17 µm/m/C), l'alliage de titane TA6V (8.8 µm/m/C) ou la gamme des alliages Aluminium-Silicium (4 à 23 µm/m/C)

### Mode de fonctionnement

Lors d'une excursion en température de l'ensemble du palier à roulements dans le cas où celui-ci est constitué des mêmes matériaux, il n'y a pas de dilatation différentielle d'éléments par rapport à d'autres, et dans ce cas, la précharge reste constante. De même, lorsque le palier est constitué de matériaux éventuellement différents, mais que la température moyenne du palier varie peu, la précharge reste également constante.

Cependant, lorsqu'un gradient de température s'installe entre l'arbre et le moyeu, supposés par exemple constitués des mêmes matériaux, l'arbre étant par exemple plus froid que le moyeu de quelques degrés, typiquement jusqu'à 10°C, les billes étant supposées être à une température moyenne, les bagues internes en contact thermique avec l'arbre auront une température plus faible que les bagues externes en contact thermique avec le moyeu, ce qui créera principalement une dilatation différentielle des bagues dans la direction radiale, dont l'effet sera une diminution de la précharge, les bagues externes se dilatant plus que les bagues internes dans le cas considéré. Cependant, les entretoises internes en contact thermique avec les bagues internes et l'arbre, et les entretoises externes en contact thermique avec les bagues externes et le moyeu, seront à des températures différentes et donc se dilateront différemment dans la direction axiale. Dans le cas considéré, les entretoises externes se dilateront plus que les entretoises internes, d'autant plus que leur longueur sera plus grande. Cet effet aura pour conséquence d'augmenter la précharge, d'autant plus que la longueur des entretoises est grande. On comprend donc que pour une longueur optimale des entretoises, l'effet de la dilatation différentielle axiale des entretoises sur la précharge, allant dans le sens d'une augmentation de la précharge, compensera l'effet de la dilatation différentielle radiale des bagues sur cette même précharge, allant dans le sens d'une diminution de la précharge.

Il est clair que le raisonnement qui vient d'être exposé est également valable lorsque l'arbre est plus chaud que le moyeu.

Il est clair également que la compensation du gradient de température se fera de la même façon au voisinage de n'importe quelle température moyenne du palier.

L'homme de l'art comprendra également que l'invention s'applique au cas où les bagues et les billes ne sont pas dans le même matériau, avec des coefficients de dilatation thermique différents, simplement en négligeant les effets de dilatation thermique différentielle entre les bagues et les billes, qui sont du second ordre quand on considère un gradient d'une dizaine de degrés typiquement.

Ainsi, le choix judicieux de la longueur des entretoises rend possible une précharge rigide relativement insensible à des gradients de température dans le palier à roulements.

Comme il existe toujours une incertitude sur la connaissance de certains éléments comme l'angle de contact des billes (connu à quelques degrés près), l'adaptation de la longueur des entretoises selon l'invention n'aboutira pas forcément à une compensation exacte de l'effet d'un gradient de température sur la précharge. Une très bonne qualité de fabrication et de tests des roulements permettra de limiter à moins de 5 à 10% les variations de la précharge rigide dues aux gradients thermiques d'un point à l'autre du palier, en particulier les gradients thermiques dans le sens radial. Cependant, une limitation à moins de 30% des variations de la précharge pourra couramment être obtenue pour le type de palier suivant l'invention selon une réalisation standard. Il est en particulier acceptable que la longueur des entretoises soit ajustée à leur valeur optimale avec une tolérance inférieure à une dizaine de pourcent.

Si l'ajustement de la longueur des entretoises conduit à une valeur trop petite par rapport à la rigidité en basculement désirée, il sera avantageux de diminuer l'angle de contact des billes, typiquement entre 20 et 30 degrés. Si par contre la longueur des entretoises conduit à une valeur trop grande par rapport à un encombrement désiré, il sera avantageux d'augmenter l'angle de contact des billes, typiquement entre 30 et 40 degrés.

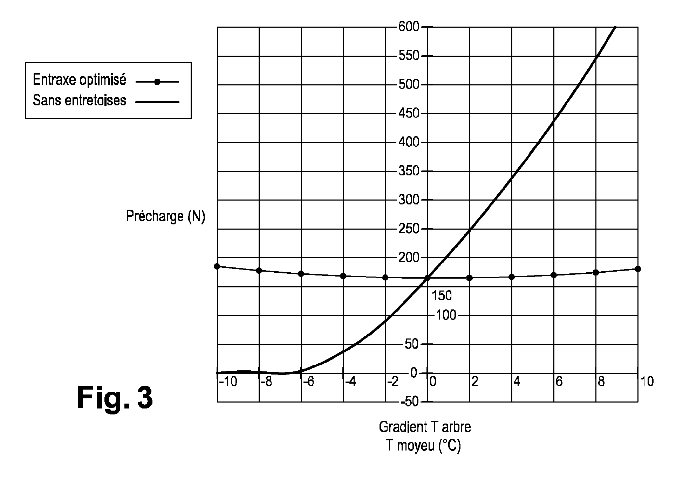

La figure 3 montre par exemple deux cas d'évolution de la précharge (avec et sans entretoise) pour un palier en acier inox (10.4 µm/m/C) du type de la figure 2 ayant les caractéristiques suivantes : des bagues de roulement en acier inox (10.4 µm/m/C), des billes en céramique de type Si3N4, avec un angle de contact α de 25°, un diamètre interne de roulement de 50 mm, un diamètre externe de roulement de 72 mm, avec 21 billes par rangée de diamètre 7.14 mm, des entretoises en acier inox (10.4 µm/m/C). Dans le cas sans entretoise (entraxe de 12 mm), la sensibilité au gradient de température est très importante. Dans l'autre cas avec des entretoises telles que l'entraxe est de 112 mm, la variation de la précharge en fonction du gradient est minimisée. Ces abaques peuvent s'obtenir par calculs analytiques ou par essais par exemple.

### Avantage de l'invention

L'utilisation d'une précharge rigide et d'entretoises servant à écarter les roulements permet d'avoir une très forte rigidité du palier ce qui est bénéfique lorsque celui-ci est soumis à des environnements vibratoires sévères.

Selon l'invention, cette longueur sera ajustée afin de rendre la précharge insensible aux effets de gradient thermique, ce qui augmentera sensiblement la précision et la durée de vie des roulements en gardant cette précharge à un niveau optimal pour le fonctionnement désiré.

### Variantes de réalisation

La portée de la présente invention ne se limite pas aux détails des formes de réalisation ci-dessus considérées à titre d'exemple, mais s'étend au contraire aux modifications à la portée de l'homme de l'art.

L'invention est applicable également sur les roulements à rouleaux coniques.

## Revendications

1. Palier à roulements, du type comportant un arbre central (11) et un moyeu (10) mobiles en rotation l'un par rapport à l'autre, le palier comportant au moins deux roulements (12, 13), disposés entre l'arbre central (11) et le moyeu (10) selon deux positions espacées dans la direction axiale (Z), ces roulements étant dotés de bagues, intérieure (14, 16) et extérieure (15, 17), et de billes (18, 19), la bague intérieure de chaque roulement prenant appui sur l'arbre central (11) et la bague extérieure sur le moyeu (10), les roulements (12, 13) étant montés dos à dos, une précharge rigide étant appliquée sur ces roulements selon la direction axiale, des entretoises (22, 23) étant disposées entre ces roulements, une entretoise dite interne (22) prenant appui, par ses extrémités haute et basse, sur les bagues intérieures (16, 14) des roulements supérieur (13) et inférieur (12) respectivement, une entretoise dite externe (23) prenant appui, par ses extrémités haute et basse, sur les bagues extérieures (17,15) des roulements supérieur (13) et inférieur (12) respectivement,
**caractérisé en ce que**
les entretoises, interne (22) et externe (23), présentent des longueurs ajustées afin de limiter à moins de 30% les variations de la précharge rigide dues aux gradients thermiques d'un point à l'autre du palier, en particulier les gradients thermiques dans le sens radial, étant entendu que, pour une longueur optimale des entretoises, l'effet de la dilatation différentielle axiale des entretoises (22, 23) sur la précharge, allant dans le sens d'une augmentation de la précharge, compense l'effet de la dilatation différentielle radiale des bagues (14, 16, 15, 17), allant dans le sens d'une diminution de cette même précharge.

2. Palier à roulements selon la revendication 1, **caractérisé en ce que** les longueurs des entretoises (22, 23) sont ajustées à leur valeur optimale avec une tolérance inférieure à une dizaine de pourcent.

3. Palier à roulements selon la revendication 1, **caractérisé en ce que** l'angle (α) de contact des billes est choisi supérieur ou égal à 25 degrés, de manière à limiter l'encombrement et la masse du palier tout en assurant une bonne rigidité.

4. Palier à roulements selon la revendication 1, **caractérisé en ce que** l'une au moins des bagues est libre de se déplacer selon la direction axiale (Z) par rapport aux autres bagues.

5. Palier à roulements selon la revendication 1, **caractérisé en ce que** l'arbre (11), le moyeu (10), et les bagues (14, 16, 15, 17) sont fabriqués dans les mêmes matériaux, ou dans des matériaux ayant sensiblement le même coefficient de dilatation thermique.

6. Palier à roulements, selon la revendication 1, **caractérisé en ce que** les longueurs des deux entretoises (22, 23) sont identiques, aux erreurs d'usinage près.

7. Palier à roulements, selon la revendication 1, **caractérisé en ce que**
- les roulements (12, 13) sont de dimensions identiques,
- le palier comporte pour chaque groupe de deux roulements (12, 13) espacés le long de la direction axiale Z, deux entretoises (22, 23) cylindriques et coaxiales.

8. Palier à roulements selon la revendication 1, **caractérisé en ce qu'**il comporte entre l'arbre central (11) et l'entretoise interne (22), ou entre les deux entretoises (22, 23), ou entre l'entretoise externe (23) et le moyeu (10), des jeux adaptés à permettre une dilatation différentielle, de l'une au moins des entretoises (22, 23) vis-à-vis de l'autre entretoise, de l'arbre central (11), ou du moyeu (10).

9. Palier à roulements selon la revendication 1, **caractérisé en ce que** l'un des roulements (13) est simplement maintenu en place par les entretoises (22, 23), d'une part, et des brides de serrage (20, 21), d'autre part, ces brides de montage ayant une raideur significativement plus faible (typiquement au moins trois fois plus faible) que la raideur axiale des entretoises.

10. Palier à roulements selon la revendication 1, **caractérisé en ce que** l'un des roulements (13) est simplement maintenu en place par les entretoises (22, 23), d'une part, et des brides de serrage (20, 21), d'autre part, et **en ce que** le roulement inférieur (12) est simplement maintenu en place par les entretoises (22, 23) d'une part, et des épaulements (27, 28) aménagés dans l'arbre central (11) et le moyeu (10), l'ensemble comprenant le roulement inférieur (12), les entretoises (22, 23) et le roulement supérieur (13) formant ainsi un volume sensiblement cylindrique, d'épaisseur égale à l'épaisseur e d'un roulement, et s'insérant dans un logement de forme correspondante au sein de l'espace compris entre l'arbre central (11) et le moyeu (10).

11. Procédé de fabrication d'un palier à roulements, du type comportant un arbre central (11) et un moyeu (10) mobiles en rotation l'un par rapport à l'autre, le palier comportant au moins deux roulements (12, 13), disposés entre l'arbre central (11) et le moyeu (10) selon deux positions espacées dans la direction axiale (Z), ces roulements étant dotés de bagues, intérieure (14, 16) et extérieure (15, 17), et de billes (18, 19), la bague intérieure de chaque roulement prenant appui sur l'arbre central (11) et la bague extérieure sur le moyeu (10), les roulements (12, 13) étant montés dos à dos, une précharge rigide étant appliquée sur ces roulements selon la direction axiale, des entretoises (22, 23) étant disposées entre ces roulements, une entretoise dite interne (22) prenant appui, par ses extrémités haute et basse, sur les bagues intérieures (16, 14) des roulements supérieur (13) et inférieur (12) respectivement, une entretoise dite externe (23) prenant appui, par ses extrémités haute et basse, sur les bagues extérieures (17,15) des roulements supérieur (13) et inférieur (12) respectivement,
**caractérisé en ce que** le procédé comporte une étape de calcul des longueurs des entretoises, interne (22) et externe (23), afin de minimiser les variations de la précharge rigide des roulements dues à des gradients thermiques prédéterminés d'un point à l'autre du palier, en particulier des gradients thermiques dans le sens radial, cette minimisation utilisant une compensation des variations de précharge, étant entendu que, pour une longueur optimale des entretoises (22, 23), l'effet de la dilatation différentielle axiale des entretoises (22, 23) sur la précharge, allant dans le sens d'une augmentation de la précharge, compense l'effet de la dilatation différentielle radiale des bagues (14, 16, 15, 17) allant dans le sens d'une diminution de cette même précharge.

## Patentansprüche

1. Wälzlager vom Typ eine zentrale Welle (11) und eine Nabe (10) umfassend, die relativ zueinander drehbar sind, wobei das Wälzlager zumindest zwei Wellenlager (12, 13) umfasst, die zwischen der zentralen Welle (11) und der Nabe (10) in zwei in axialer Richtung (Z) beabstandeten Positionen angeordnet sind, wobei diese Wellenlager mit inneren (14, 16) und äußeren (15, 17) Ringen und Kugeln (18, 19) versehen sind, und der innere Ring eines jeden Wellenlagers an der zentralen Welle (11) anliegt und der äußere Ring an der Nabe (10) und die Wellenlager (12, 13) mit ihren Rückseiten zueinander montiert sind, wobei eine feste Vorspannung in axialer Richtung auf diese Wellenlager angewandt wird und Abstandhalter (22, 23) zwischen diesen Wellenlagern angeordnet sind, wobei sich ein sogenannter innerer (22) Abstandhalter an seinem oberen und unteren Ende an den inneren Ringen (16, 14) vom jeweils oberen (13) und unteren (12) Wellenlager anlegt, und sich ein sogenannter äußerer (23) Abstandhalter an seinem oberen und unteren Ende an den äußeren Ringen (17, 15) vom jeweils oberen (13) und unteren (12) Wellenlager anlegt,
**dadurch gekennzeichnet, dass**
der innere (22) und äußere (23) Abstandhalter angepasste Längen aufweisen, um die Variationen der festen Vorspannung aufgrund der thermischen Gradienten von einem Punkt zum anderen des Wellenlagers, und vor allem die thermischen Gradienten in radialer Richtung, auf weniger als 30% zu beschränken, wobei vorausgesetzt wird, dass für eine optimale Länge der Abstandhalter die Wirkung der differenzialen axialen Ausdehnung der Abstandhalter (22, 23) auf die Vorspannung in Richtung einer Erhöhung der Vorspannung die Wirkung der differenzialen radialen Ausdehnung der Ringe (14, 16, 15, 17) in Richtung einer Verringerung derselben Vorspannung kompensiert.

2. Wälzlager nach Anspruch 1, **dadurch gekennzeichnet, dass** die Längen der Abstandhalter (22, 23) auf ihren optimalen Wert mit einer Toleranz von unter etwa 10% angepasst werden.

3. Wälzlager nach Anspruch 1, **dadurch gekennzeichnet, dass** der Kontaktwinkel (α) der Kugeln kleiner oder gleich 25 Grad ausgewählt wird, um Platzbedarf und Gewicht des Wälzlagers zu begrenzen, und gleichzeitig für eine gute Steifigkeit zu sorgen.

4. Wälzlager nach Anspruch 1, **dadurch gekennzeichnet, dass** zumindest einer der Ringe frei ist, um sich in die axiale Richtung (Z) im Verhältnis zu den anderen Ringen zu bewegen.

5. Wälzlager nach Anspruch 1, **dadurch gekennzeichnet, dass** die Welle (11), die Nabe (10) und die Ringe (14, 16, 15, 17) aus denselben Werkstoffen hergestellt sind, oder aus Werkstoffen, die in etwa denselben Wärmeausdehnungskoeffizienten aufweisen.

6. Wälzlager nach Anspruch 1, **dadurch gekennzeichnet, dass** die Längen der beiden Abstandhalter (22, 23) von Bearbeitungsfehlern abgesehen identisch sind.

7. Wälzlager nach Anspruch 1, **dadurch gekennzeichnet, dass**
- die Wellenlager (12, 13) identische Abmessungen aufweisen,
- das Wälzlager für jede Gruppe von zwei Wellenlagern (12, 13), die entlang der axialen Richtung Z in einem Abstand zueinander liegen, zwei zylindrische und koaxiale Abstandhalter (22, 23) umfasst.

8. Wälzlager nach Anspruch 1, **dadurch gekennzeichnet, dass** es zwischen der zentralen Welle (11) und dem inneren Abstandhalter (22), oder zwischen den beiden Abstandhaltern (22, 23), oder zwischen dem äußeren Abstandhalter (23) und der Nabe (10) Spiele aufweist, die eine differenziale Ausdehnung von zumindest einem der Abstandhalter (22, 23) gegenüber dem anderen Abstandhalter, von der zentralen Welle (11) oder der Nabe (10) zulassen.

9. Wälzlager nach Anspruch 1, **dadurch gekennzeichnet, dass** eines der Wellenlager (13) einfach von den Abstandhaltern (22, 23) einerseits und den Klemmflanschen (20, 21) andererseits in Position gehalten wird, wobei diese Montageflansche eine bedeutend geringere Steifigkeit (typischerweise dreimal geringer) aufweisen, als die axiale Steifigkeit der Abstandhalter.

10. Wälzlager nach Anspruch 1, **dadurch gekennzeichnet, dass** eines der Wellenlager (13) einfach von den Abstandhaltern (22, 23) einerseits und den Klemmflanschen (20, 21) andererseits in Position gehalten wird, und dadurch, dass das untere Wellenlager (12) einfach von den Abstandhaltern (22, 23) einerseits und den Bünden (27, 28) in Position gehalten wird, die in der zentralen Welle (11) und der Nabe (10) angeordnet sind, wobei die Einheit bestehend aus dem unteren Wellenlager (12), dem Abstandhalter (22, 23) und dem oberen Wellenlager (13) ein in etwa zylindrisches Volumen mit der Stärke gleich der Stärke (θ) eines Wellenlagers bildet, und sich in eine Aufnahme einer entsprechenden Form im Bereich des Raumes einfügt, der zwischen der zentralen Welle (11) und der Nabe (10) enthalten ist.

11. Verfahren zur Herstellung eines Wälzlagers vom Typ eine zentrale Welle (11) und eine Nabe (10) umfassend, die relativ zueinander drehbar sind, wobei das Lager zumindest zwei Wellenlager (12, 13) umfasst, die zwischen der zentralen Welle (11) und der Nabe (10) in zwei in axialer Richtung (Z) beabstandeten Positionen angeordnet sind, wobei diese Wellenlager mit inneren (14, 16) und äußeren (15, 17) Ringen und Kugeln (18, 19) versehen sind, und der innere Ring eines jeden Wellenlagers an der zentralen Welle (11) anliegt und der äußere Ring an der Nabe (10) und die Wellenlager (12, 13) mit ihren Rückseiten zueinander montiert sind, wobei eine feste Vorspannung in axialer Richtung auf diese Wellenlager angewandt wird und Abstandhalter (22, 23) zwischen diesen Wellenlagern angeordnet sind, wobei sich ein sogenannter innerer (22) Abstandhalter an seinem oberen und unteren Ende an den inneren Ringen (16, 14) vom jeweils oberen (13) und der unteren (12) Wellenlager anlegt, und sich ein sogenannter äußerer (23) Abstandhalter an seinem oberen und unteren Ende an den äußeren Ringen (17, 15) vom jeweils oberen (13) und unteren (12) Wellenlager anlegt,
**dadurch gekennzeichnet, dass** das Verfahren einen Schritt zur Berechnung der Längen des inneren (22) und äußeren (23) Abstandhalters umfasst, um die Variationen der festen Vorspannung der Wellenlager aufgrund vorbestimmter thermischer Gradienten von einem Punkt zum anderen des Wälzlagers und vor allem der thermischen Gradienten in der radialen Richtung zu minimieren, wobei diese Minimierung eine Kompensation der Vorspannungsvariationen verwendet, wobei vorausgesetzt wird, dass für eine optimale Länge der Abstandhalter (22, 23) die Wirkung der differenzialen axialen Ausdehnung der Abstandhalter (22, 23) auf die Vorspannung in Richtung einer Erhöhung der Vorspannung die Wirkung der differenzialen radialen Ausdehnung der Ringe (14, 16, 15, 17) in Richtung einer Verringerung derselben Vorspannung kompensiert.

## Claims

1. Rolling bearing device of the type comprising a central shaft (11) and a hub (10), mobile in rotation relative to each other, in which the bearing comprises at least two rolling bearings (12, 13), arranged between the central shaft (11) and the hub (10) in two positions spaced in the axial direction Z, these bearings being equipped with inner (14, 16) and outer (15, 17) rings and with balls (18, 19), the inner ring of each rolling bearing resting on the central shaft (11) and the outer ring on the hub (10), the rolling bearings (12, 13) being mounted back-to-back, a rigid preload being applied to these rolling bearings in the axial direction, spacers (22, 23) being placed between these rolling bearings, a spacer designated "inner" (22) resting, by its upper and lower ends, on the inner rings (14, 16) of the upper and lower rolling bearings, respectively; a spacer designated "outer" (23) resting, by its upper and lower ends, on the outer rings (15, 17) of the upper (13) and lower (12) rolling bearings, respectively,
**characterized in that** the lengths of the spacers, both "inner" (22) and "outer" (23), are adjusted to limit variations in rigid preload caused by temperature gradients from one point of the bearing to another to less than 30%, particularly thermal gradients in the radial direction, being understood that, for the optimum length of the spacers (22, 23), the effect of the differential axial expansion of the spacers on the preload, going in the direction of an increased preload, will offset the effect of differential radial expansion of the rings (14, 16, 15, 17) on this same preload, along the lines of a decreased preload.

2. Rolling bearing device according to claim 1, **characterized in that** the lengths of the spacers (22, 23) are adjusted to their optimal value with a tolerance of less than about ten percent.

3. Rolling bearing device according to claim 1, **characterized in that** the angle (α) of contact of the balls (18, 19) is chosen to be higher or equal to 25 degrees, so as to limit the mass and size of the bearing while ensuring a good rigidity.

4. Rolling bearing device according to claim 1, **characterized in that** at least one of the rings is free to move along the axial direction (Z) with respect to the other rings.

5. Rolling bearing device according to claim 1, **characterized in that** the shaft (11), hub (10), and rings (14, 16, 15, 17) are made of the same materials, or materials having substantially the same coefficient of thermal expansion.

6. Rolling bearing device according to claim 1, **characterized in that** the lengths of the two spacers (22, 23) are identical, within the tolerances of machining errors.

7. Rolling bearing device according to claim 1, **characterized in that**:
- the rolling bearings (12, 13) have identical dimensions, and
- the bearing comprises for each group of two rolling bearings (12, 13) spaced along the axial direction Z, two cylindrical and coaxial spacers.(22, 23).

8. Rolling bearing device according to claim 1, **characterized in that** the bearing comprises at least, between the central shaft (11) and the inner spacer (22), or between the two spacers (22, 23), or between the outer spacer (23) and the hub (10), clearances designed to permit differential radial expansion of at least one of the spacers (22, 23) with respect to the other spacer, or to the central shaft (11) or to the hub (10).

9. Rolling bearing device according to claim 1, **characterized in that** one of the rolling bearings (13) is simply held in place on one side by the spacers (22, 23) and on the other side by clamps (20, 21), these clamps (20, 21) having a significantly lower stiffness (typically at least three times less) than the axial stiffness of the spacers (22, 23).

10. Rolling bearing device according to claim 1, **characterized in that** one of the rolling bearings (13) is simply held in place on one side by the spacers (22, 23) and on the other side by clamps (20, 21), and **in that** the lower bearing (12) is simply held in place on one side by the spacers (22, 23), and on the other side by shoulders (27, 28) provided in the central shaft (11) and the hub (10), the assembly comprising the lower rolling bearing (12), the spacers (22, 23) and the upper rolling bearing (13) thus forming a substantially cylindrical volume, whose thickness is equal to the thickness e of a rolling bearing, and fitting into a housing of corresponding shape within the space between the central shaft (11) and the hub (10).

11. Process for manufacturing a rolling bearing device of the type comprising a central shaft (11) and a hub (10), mobile in rotation relative to each other, the bearing comprising at least two rolling bearings (12, 13), arranged between the central shaft (11) and the hub (10) in two positions spaced in the axial direction Z, these bearings being equipped with inner (14, 16) and outer (15, 17) rings and with balls (18, 19), the inner ring of each rolling bearing resting on the central shaft (11) and the outer ring on the hub (10), the rolling bearings (12, 13) being mounted back-to-back, a rigid preload being applied to these rolling bearings in the axial direction, spacers (22, 23) being placed between these rolling bearings, a spacer designated "inner" (22) resting, by its upper and lower ends, on the inner rings (14, 16) of the upper and lower rolling bearings, respectively; a spacer designated "outer" (23) resting, by its upper and lower ends, on the outer rings (15, 17) of the upper (13) and lower (12) rolling bearings, respectively.
**characterized in that** the process comprising a step of computation of the lengths of the internal (22) and external (23) spacers so as to minimize the variations of rigid preload of the bearings caused by predetermined temperature gradients from one point of the rolling bearing to another, particularly temperature gradients along a radial direction, this minimization involving a compensation of preload variations, being understood that, for the optimum length of the spacers, the effect of the differential axial expansion of the spacers (22, 23) on the preload, going in the direction of an increased preload, will offset the effect of differential radial expansion of the rings (14, 16, 15, 17) on this same preload, along the lines of a decreased preload.
